# EUROPÄISCHE PATENTSCHRIFT

(11) **EP 3 927 504 B1**
(45) Veröffentlichungstag und Bekanntmachung des Hinweises auf die Patenterteilung: **28.09.2022**
(21) Anmeldenummer: 20712523.8
(22) Anmeldetag: 17.03.2020
(51) Int. Cl.: B25J 15/02, B25B 5/02, B25B 5/06, B25B 5/16

(54) **SPANN- ODER GREIFVORRICHTUNG MIT ERWEITERTEM HUB**
CLAMPING OR GRIPPING ASSEMBLY WITH INCREASED RANGE
DISPOSITIF DE PRÉHENSION OU DE SERRAGE AVEC UNE COURSE ÉLARGIE

(30) Priorität: 25.03.2019 DE 102019107557
(43) Veröffentlichungstag der Anmeldung: 29.12.2021
(73) Patentinhaber: Schunk GmbH & Co. KG Spann- und Greiftechnik, 74348 Lauffen am Neckar (DE)
(72) Erfinder: WOHLFAHRT, Jens, 97980 Bad Mergentheim (DE); BECKER, Ralf, 71672 Marbach (DE); SCHNEIDER, Helge, 74336 Brackenheim-Hausen (DE)
(74) Vertreter: DREISS Patentanwälte PartG mbB
(86) Internationale Anmeldenummer: PCT/EP2020/057244
(87) Internationale Veröffentlichungsnummer: WO 2020/193279

(56) Entgegenhaltungen:
- CN-A- 105 538 306
- CN-A- 105 538 306
- DE-U1-202017 004 877
- DE-U1-202017 004 877
- US-A- 5 342 254
- US-A- 5 342 254

## Beschreibung

Die Erfindung betrifft eine Greif- oder Spannvorrichtung, mit einem Grundkörper, mit am Grundkörper vorgesehenen, insbesondere parallel zueinander verlaufenden Führungsabschnitten, und mit wenigstens zwei entlang den Führungsabschnitten in Verfahrrichtung bewegbaren Backen, die zwischen einer inneren Hublage und einer äußeren Hublage verfahrbar sind. Die innere Hublage kann dabei eine Mittellage zwischen zwei äußeren Hubendlage bilden. Die Backen weisen jeweils einen Zahnreihenabschnitt mit jeweils einer sich in Verfahrrichtung erstreckenden Länge l auf. Ferner sind mehrere Ritzel vorgesehen, deren Drehachsen in einer parallel zum jeweiligen Zahnreihenabschnitten liegenden Ebene liegen, die zum Antreiben der Backen mit dem jeweiligen Zahnreihenabschnitt zusammenwirken. Die Drehachsen benachbarter Ritzel weisen einen Abstand a zueinander auf.

Zum Spannen oder Greifen von Gegenständen werden bei derartigen Greif- oder Spannvorrichtungen an den Backen Backenaufsätze, wie mit Greiffingern angeordnet. Durch Verfahren der Backen zwischen den Hubendlagen können die Backenaufsätze zum Innen- oder Außengreifen der Gegenstände bewegt werden.

Eine eingangs genannte Greif- oder Spannvorrichtung mit den Merkmalen des Oberbegriffs des Anspruches 1 ist beispielsweise aus der DE 20 2017 004 877 U1 bekannt. Eine weitere beispielhafte Greifoder Spannvorrichtung ist aus US 4,707,013 bekannt. Dort sind über die gesamte Fahrbewegung der Backen die Ritzel fortwährend im Eingriff mit den an den Backen vorgesehenen Zahnreihen.

In der DE 39 21 055 A1 ist ein Greifwerkzeug offenbart, wobei fortwährend jeweils ein Stirnrad mit einem mit einem Greiffinger verbundenen Zahnstangenschlitten im Eingriff ist. Bei solchen Greifvorrichtungen ist es wünschenswert, einen möglichst großen Hub, also eine möglichst große Fahrbewegung, zwischen den Hubendlagen bereitzustellen. Dennoch soll eine sichere Funktionsfähigkeit der Spann- und Greifvorrichtung gewährleistet werden.

Diese Aufgabenstellung wird mit einer Spann- oder Greifvorrichtung mit den Merkmalen des Patentanspruchs 1 gelöst. Folglich ist insbesondere vorgesehen, dass die Längen s der Führungsabschnitte, die Längen l der Zahnreihenabschnitte und der Abstand a der benachbarten Ritzel so gewählt sind, dass in einer äußeren Hubendlage ein Ritzel mit nur einem Zahnreihenabschnitt und ein anderes Ritzel mit nur dem anderen Zahnreihenabschnitt zusammenwirkt. In der äußeren Hubendlage, wenn also die Backen ihren maximalen Abstand zueinander einnehmen, wirken wenigstens ein Ritzel mit nur dem Zahnreihenabschnitt der einen Backe und ein anderes Ritzel mit nur dem Zahnreihenabschnitt der anderen Backe zusammen. Benachbarte Ritzel übergeben folglich den jeweiligen Zahnreihenabschnitt weiter zum nächsten Ritzel, bis die äußere Hubendlage erreicht ist. In der jeweiligen äußeren Hubendlage wirken folglich nicht mehr alle Ritzel mit Zahnreihenabschnitten zusammen, sondern wenigstens ein Ritzel befindet sich nicht mehr im Eingriff mit dem einen Zahnreihenabschnitt bzw. wenigstens ein anderes Ritzel befindet sich nicht mehr im Eingriff mit dem anderen Zahnreihenabschnitt. Zudem wirken in einer der inneren Hublagen wenigstens zwei Ritzel mit einem Zahnreihenabschnitt zusammen, so dass in dieser inneren Hublage wenigstens zwei Ritzel gleichzeitig mit einem Zahnreihenabschnitt im Eingriff sind. Dadurch wird im Vergleich zum bekannten Stand der Technik eine Huberweiterung der Spann- oder Greifvorrichtung erreicht.

Insbesondere können die Spann- oder Greifvorrichtungen als Parallelgreifer ausgebildet sein, wobei dann die Zahnreihenabschnitte parallel zueinander verlaufen, die Drehachsen der Ritzel in einer parallel zum jeweiligen Zahnreihenabschnitt liegenden Ebene liegen und die Ebene zwischen den parallel zueinander verlaufenden Zahnreihenabschnitten liegt. Die Erfindung ist dabei nicht auf Parallelgreifer beschränkt, sondern bezieht sich auch auf Zentrischgreifer.

Die innere Hublage kann je nach Art und Aufbau der Spann- oder Greifvorrichtung eine innere Hubendlage oder eine zwischen zwei äußeren Hubendlagen liegende Mittellage sein.

Eine vorteilhafte Ausbildung ergibt sich dann, wenn die Länge l der Zahnreihenabschnitte im Bereich des 1,0 bis 2,0 fachen des Abstands a der Drehachsen benachbarter Ritzeln, und vorzugsweise im Bereich des 1,1 bis 1,5 fachen des Abstands a der Drehachsen der benachbarten Ritzeln liegen. Dadurch kann gewährleistet werden, dass die Zahnreihenabschnitte beim Bewegen der Backen in Richtung der äußeren Hubendlage mit dem in Verfahrrichtung jeweils hinteren Ritzel in Ausgriff kommen bzw. mit diesem in Verfahrrichtung hinteren Ritzel nicht mehr zusammenwirken.

Vorteilhafterweise liegen die Länge s der Führungsabschnitte im Bereich des 2 bis 6 fachen, und vorzugsweise im Bereich des 3 bis 4 fachen, der Länge l der Zahnreihenabschnitte.

Die Erfindung sieht vor, dass wenigstens zwei Ritzel vorgesehen sind, wobei die Zahnreihenabschnitte in der inneren Hublage bzw. der Mittellage mit beiden Ritzeln zusammenwirken. Die Länge l des jeweiligen Zahnreihenabschnitts kann dabei etwas größer sein als der Abstand a zwischen den beiden Ritzeln und insbesondere im Bereich des 1,1 bis 1,5 fachen des Abstands a liegen. In der inneren Hublage bzw. der Mittellage wird dadurch gewährleistet, dass die Zahnreihenabschnitte mit beiden Ritzeln zusammenwirken.

Bei einer weiteren Ausführungsform ist vorgesehen, dass wenigstens drei Ritzel vorgesehen sind, wobei die Zahnreihenabschnitte in der Mittellage oder der inneren Hublage mit nur dem mittleren Ritzel zusammenwirken. Beim Vorsehen von drei Ritzeln weisen die jeweils benachbarten Ritzel vorzugsweise einen gleichen Abstand a auf. Auch bei dieser Ausführungsform ist es vorteilhaft, wenn die Längen l der Zahnreihenabschnitte wenigstens geringfügig größer sind als der Abstand der Ritzel, und insbesondere im Bereich des 1,1 bis 1,5 fachen des Abstands a liegen, so dass beim Bewegen der Backen aus der inneren Hublage die Ritzel die Zahnreihenabschnitte übergeben, so dass die Zahnreihenabschnitte dann mit jeweils einem zweiten Ritzel in Kontakt kommen.

Gemäß der Erfindung ist denkbar, dass nicht nur 3, sondern 4, 5, 6 oder mehr Ritzel mit in einer Ebene liegenden Drehachse vorgesehen sind.

Ferner ist vorteilhaft, wenn die einzelnen Ritzel jeweils an einem Ritzelabschnitt an einer jeweiligen Welle vorgesehen sind und wenn jede Welle einen Zahnradabschnitt mit einem in radialer Richtung das zugehörige Ritzel überragenden Zahnrad aufweist, wobei zwei benachbarte Zahnräder über ein Koppelrad miteinander bewegungsgekoppelt sein können. Insgesamt ergibt sich hierdurch eine bauraumsparende Anordnung. Allerdings ist auch denkbar, dass zwischen zwei Ritzeln direkt ein Koppelrad vorgesehen ist, dass also kein extra Zahnradabschnitt mit einem in radialer Richtung überragenden Zahnrad vorgesehen ist. Das Koppelrad kämmt direkt die Ritzel. Ferner ist denkbar, dass an der jeweiligen Welle ein Zahnrad vorgesehen ist, dass das jeweilige Ritzel nicht überragt bzw. dass zum jeweiligen Ritzel in radialer Richtung zurückversetzt ist.

Zum Antrieb der Ritzel ist vorteilhafterweise eine Antriebswelle mit einem Antriebsritzel vorgesehen, welches mit einem Zahnrad oder einem Koppelrad zum Antrieb der einzelnen Wellen zusammenwirkt. Die Antriebswelle wird dabei vorzugsweise von einem Antrieb, beispielsweise einen Elektromotor, angetrieben, wobei zwischen der Antriebswelle und dem Antrieb gegebenenfalls ein Übersetzungsgetriebe vorhanden sein kann. Allerdings können auch andere Arten des Antriebs der Ritzel vorgesehen sein; beispielsweise können die Ritzel mittels einem Kettenantrieb oder einem Antriebsband angetrieben werden.

Eine weitere vorteilhafte Ausführungsform sieht vor, dass die Führungsabschnitte als Führungsleisten mit an zwei einander abgewandten Seitenwandungen vorgesehenen Führungsflächen ausgebildet sind, wobei die Seitenwandungen mit den Führungsflächen parallel zur von den Drehachse der Ritzel aufgespannten Ebene verlaufend angeordnet sind. Hierdurch wird eine liegende Führung realisiert, wodurch in axialer Richtung Bauraum eingespart werden kann.

Ferner ist denkbar, dass die Seitenwandungen mit den Führungsflächen senkrecht zu einer solchen Ebene verlaufend angeordnet sind. Hierdurch wird eine stehende Führung realisiert, die hin zur Mittelebene vergleichsweise schlank baut.

Weitere Einzelheiten und vorteilhafte Ausgestaltungen der Erfindung sind der nachfolgenden Beschreibung zu entnehmen, anhand derer zwei Ausführungsbeispiele der Erfindung näher beschrieben und erläutert sind.

Es zeigen:
- Figur 1: eine Greifvorrichtung von schräg unten;
- Figur 2: einen Querschnitt durch die Greifvorrichtung gemäß Figur 1 in einer durch die Backen verlaufenden Ebene in der Mittellage bzw. inneren Hublage der Backen;
- Figur 3: den Schnitt gemäß der Figur 2 in einer Zwischenhublage;
- Figur 4: den Schnitt gemäß Figur 2 in einer äußeren Hubendlage;
- Figur 5: einen Querschnitt durch die Greifvorrichtung gemäß Figur 1 in einer unter den Backen liegenden Ebene;
- Figur 6: einen Querschnitt durch eine zweite Ausführungsform einer Greifvorrichtung in einer durch die Backen verlaufenden Ebene in der Mittellage bzw. inneren Hublage; und
- Figur 7: einen der Figur 6 entsprechenden Querschnitt in einer äußeren Hubendlage.

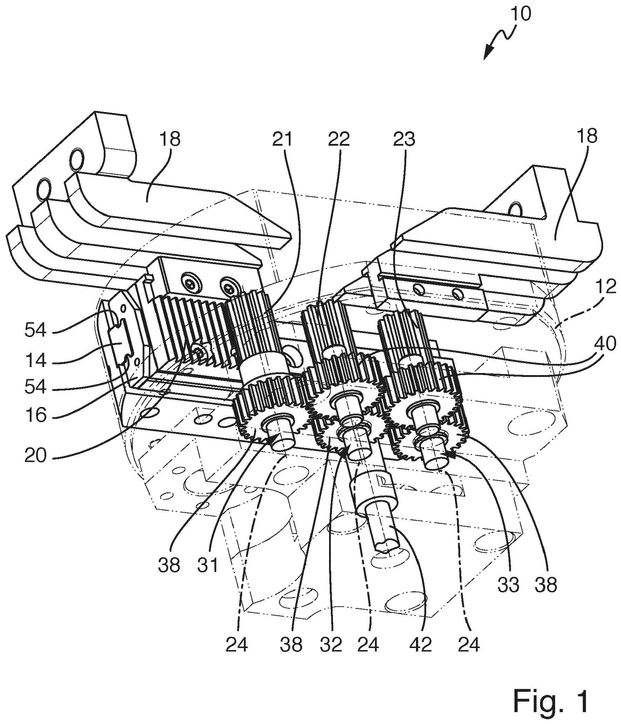

In der Figur 1 ist eine Greifvorrichtung 10 gezeigt, die einen Grundkörper 12 aufweist, an dem zwei parallel zueinander verlaufende Führungsabschnitte 14 vorgesehen sind. Der Grundkörper 12 ist nur gestrichelt angedeutet und lediglich ein Führungsabschnitt 14 ist mit einer entlang des Führungsabschnitts 14 verfahrbaren Backe 16 ausgezeichnet.

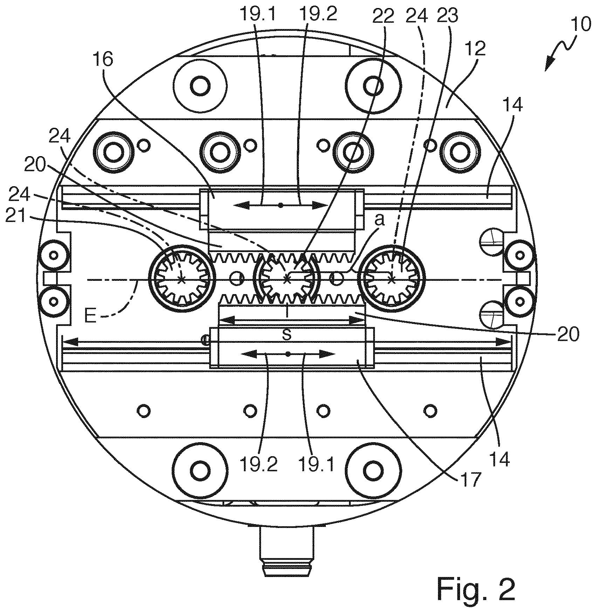

In den Figuren 2 bis 4 sind die parallel zueinander verlaufenden Führungsabschnitte 14 und die beiden Backen 16, 17 deutlich zu erkennen. Gemäß der Erfindung können auch drei Backen vorgesehen sein, die dann zentrisch aufeinander zu bzw. voneinander weg verfahrbar angeordnet sind.

In der Darstellung gemäß der Figur 1 sind Aufsatzbacken 18 gezeigt, die an den Backen 16, 17 befestigbar sind. Mit den Aufsatzbacken 18 können in den Figuren nicht gezeigte Bauteile direkt, oder unter Zwischenschaltung von Greiffingern, gegriffen oder gespannt werden.

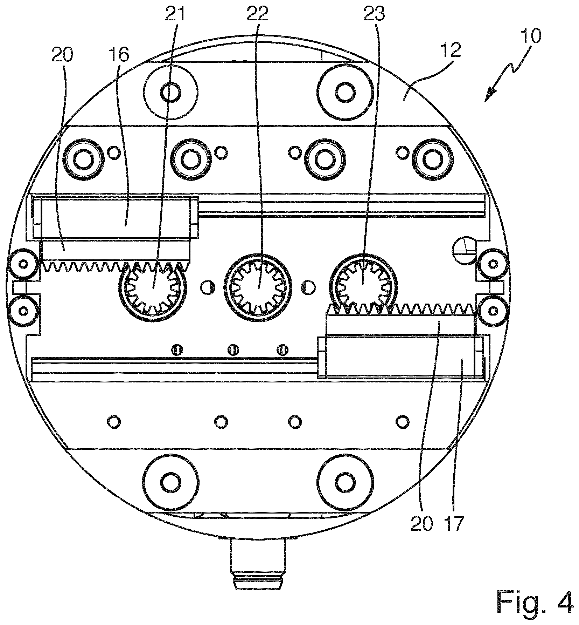

Die Backen 16, 17 sind zwischen einer Mittellage bzw. inneren Hublage, wie sie in Figur 2 gezeigt ist, und zwei äußeren Hubendlagen, von denen eine in Figur 4 gezeigt ist, an den Führungsabschnitten 14 verfahrbar angeordnet. Von der Mittellage ausgehend können die Backen 16, 17 folglich zum einen in die jeweilige Verfahrrichtung 19.1. in die in der Figur 4 gezeigte äußere Hubendlage und zum anderen in die jeweilige Verfahrrichtung 19.2 in einen zweite, äußere Hubendlage bewegt werden.

Die beiden Backen 16, 17 weisen an den einander zugewandten Seiten jeweils Zahnreihenabschnitte 20 auf. Die Zahnreihenabschnitte 20 weisen jeweils eine sich in Verfahrrichtung 19 erstreckende Länge l auf. Die Führungsabschnitte 14 weisen eine sich ebenfalls in Verfahrrichtung 19 erstreckende Länge s auf.

Wie aus den Figuren 1 bis 4 deutlich wird, weist die Greifvorrichtung 10 insgesamt drei Ritzel 21, 22 und 23 auf, deren Drehachsen 24 in einer parallel zu den Zahnreihenabschnitten 20 und auch zwischen den Zahnreihenabschnitten 20 liegenden Mittelebene E angeordnet sind. Die Drehachse 24 der benachbarten Ritzel 21, 22 und 23 weisen jeweils einen Abstand a auf. Über ein Zusammenwirken der Ritzel 21, 22 und 23 mit den Zahnreihenabschnitten 20 werden letztlich die Backen 16, 17 von der Mittellage in die jeweilige äußere Hubendlage bewegt.

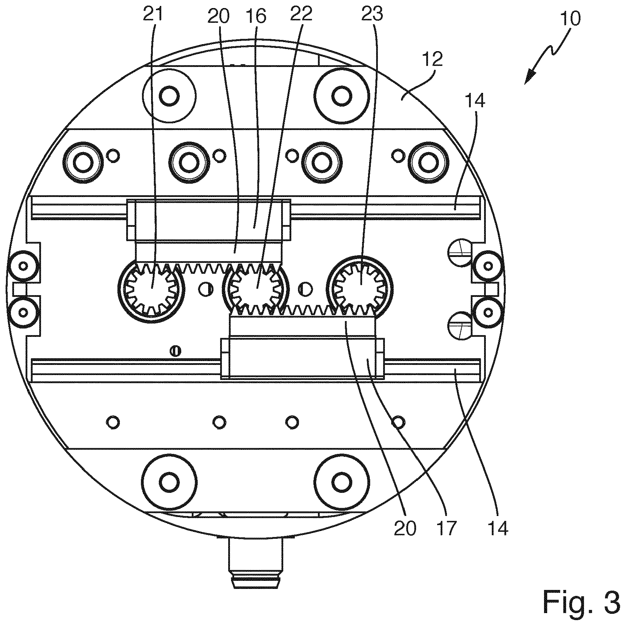

Wie aus den Figuren 2, 3 und 4 deutlich wird, ist die Länge l der Zahnreihenabschnitte 20 so gewählt, dass diese im Bereich des 1,2 fachen bis 1,5 fachen des Abstands a liegt. Ferner sind die Länge s der Führungsabschnitte so gewählt, dass sie im Bereich des 2 bis 6 fachen, und vorzugsweise im Bereich des 3 bis 4 fachen, der Länge l der Zahnreihenabschnitte 20 liegen. Daraus ergibt sich, dass in der in Figur 2 gezeigten inneren Mittellage lediglich das mittlere Ritzel 22 mit beiden Zahnreihenabschnitten 20 der beiden Backen 16, 17 zusammenwirkt. Beim Verlagern der Backen 16, 17 in Richtung der einen äußeren Hubendlage bewegt sich folglich zunächst die Backe 16 in Verfahrrichtung 19.1 nach links und die Backe 17 in Verfahrrichtung 19.2 nach rechts, wie es in Figur 3 gezeigt ist. In dieser Zwischenhublage wirken die Ritzel 21 und 22 mit dem Zahnreihenabschnitt 20 der Backe 16 zusammen. Die Ritzel 22 und 23 wirken mit dem Zahnreihenabschnitt 20 der Backe 17 zusammen. Werden die Backen 16 bzw. 17 in Verfahrrichtung 19.1 bzw. 19.2 weiter bewegt, so kommt es zum Ausgriff des mittleren Ritzels 22 aus den Zahnreihenabschnitten 20 der beiden Backen 16, 17.

Die Lage der Ritzel 21, 22, 23, deren Abstand a sowie die Länge l der Zahnreihen sind vorteilhafterweise so gewählt, dass die Zahnreihenabschnitte 20 dann mit zwei Ritzeln 21, 22 bzw. 22, 23 im Eingriff sind, wenn sich die jeweilige Backe 16,17 im Nenngreifbereich befindet. Der Nenngreifbereich ist dabei der Bereich, in welchem sich die Backen 16, 17 zum Greifen von Gegenständen regelmäßig befinden. Insofern wird gewährleistet, dass in diesem Bereich jeder Zahnreihenabschnitt 20, und damit jede Backe 16, 17 funktionssicher mit zwei Ritzeln 21, 22 bzw. 22, 23 zusammenwirkt, so dass auch hohe Greifkräfte sicher übertragen werden können.

In der in Figur 4 gezeigten äußeren Hubendlage wirkt das Ritzel 21 nur mit dem Zahnreihenabschnitt 20 der Backe 16 zusammen und das Ritzel 23 wirkt nur mit dem anderen Zahnreihenabschnitt 20 der Backe 17 zusammen. Die Zahnreihenabschnitte 20 der Backen 16 und 17 werden folglich vor Erreichen der äußeren Hubendlage den äußeren Ritzeln 21, 23 übergeben. Insgesamt wird hierdurch eine Erweiterung des maximalen Hubes bei gleichzeitig kompakt bauender Greifvorrichtung.

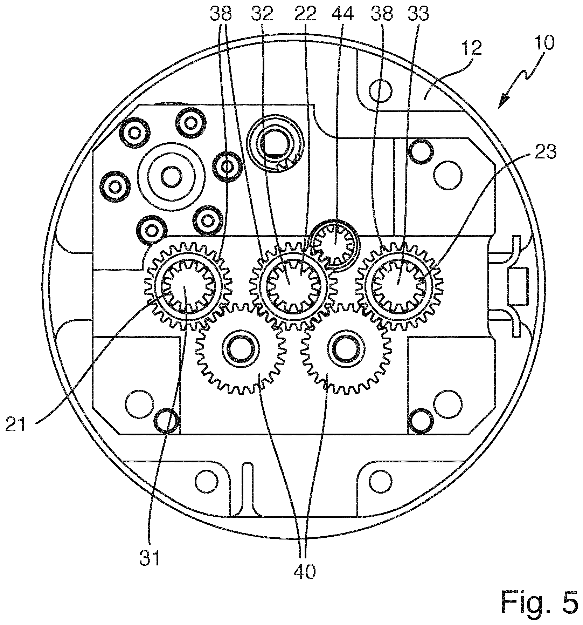

In der Figur 5 ist ein Querschnitt durch die Greifvorrichtung 10 in einer Ebene gezeigt, die unterhalb der Backen 16, 17 bzw. deren Zahnreihenabschnitte 20 liegt. Deutlich zu erkennen sind die drei Ritzel 21, 22 und 23, die jeweils, wie auch aus Figur 1 deutlich wird, an einer Welle 31, 32 und 33 vorgesehen sind. Jede der Wellen 31, 32 und 33 weist nicht nur jeweils einen Ritzelabschnitt für das jeweilige Ritzel 21, 22, 23 auf, sondern auch einen Zahnradabschnitt an dem jeweils ein Zahnrad 38 vorgesehen ist. Die Zahnräder 38 überragen dabei die jeweiligen Ritzel 21, 22, 23 in radialer Richtung. Zur synchronen Bewegungskopplung der Wellen 31, 32, 33 sind Koppelräder 40 vorgesehen. Zum Antreiben der Ritzel 21, 22, 23 ist, wie aus Figur 1 deutlich wird, eine Antriebswelle 42 vorgesehen, welche ein in Figur 5 gezeigtes Antriebsritzel 44 aufweist, welches mit dem Ritzel 22 zusammenwirkt. Die Antriebswelle 42 wird von insbesondere einem in den Figuren nicht gezeigten Elektromotor angetrieben, wobei zwischen der Antriebswelle 42 und der Abtriebswelle des Elektromotors ein oder mehrere Getriebe vorgesehen sein können.

Bei einer nicht gezeigten Ausführungsform ist denkbar, dass die Koppelräder 40 nicht an einem vom jeweiligen Ritzel 21, 22, 23 separat ausgebildeten Zahnrad 38 angreift, sondern direkt mit dem jeweiligen Ritzeln 21, 22, 23 zusammenwirken. Die Drehachsen der Koppelräder 40 können insbesondere auch in der Ebene E liegen.

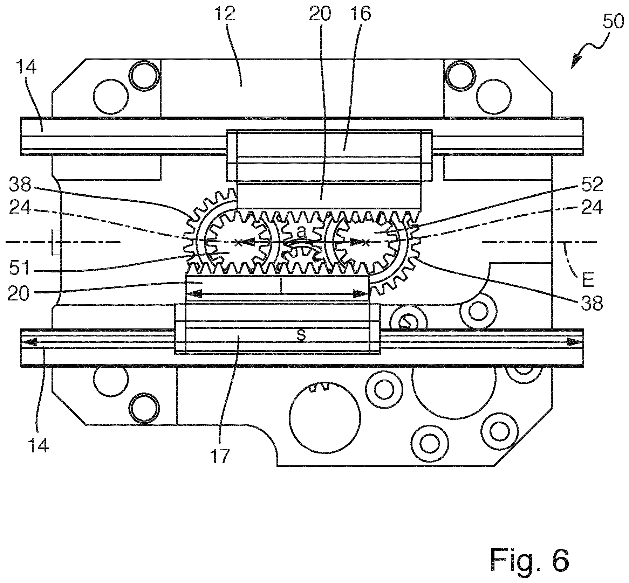

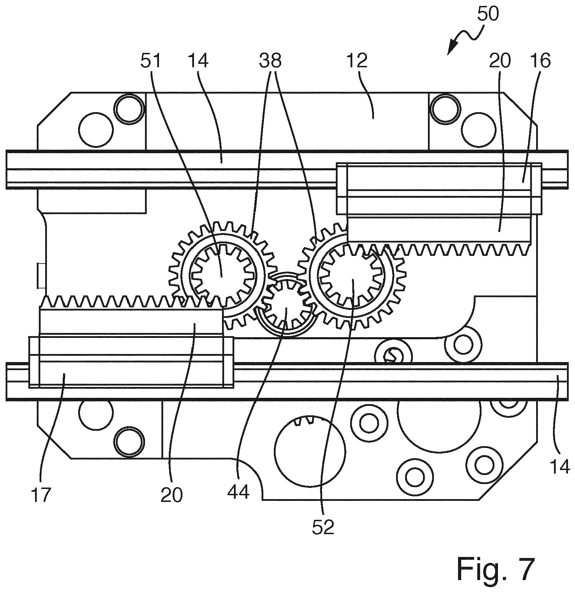

In der Figur 6 und 7 ist eine Greifvorrichtung 50 gezeigt, die im Unterschied zur Greifvorrichtung 10 gemäß den Figuren 1 bis 5 lediglich zwei Ritzel 51 und 52 aufweist. Der Greifvorrichtung 10 entsprechende Bauteile sind mit entsprechenden Bezugszahlen versehen.

Die Ritzel 51, 52 befinden sich, wie bei der Greifvorrichtung 10, jeweils auf einer Welle, auf welcher neben dem jeweiligen Ritzel 51, 52 auch ein größeres Zahnrad 38 vorgesehen ist. Die beiden Zahnräder 38 kämmen dabei das Antriebsritzel 44.

Wie aus Figur 6 deutlich wird, ist in der Mittellage bzw. inneren Hublage die Anordnung derart, dass die Zahnreihenabschnitte 20 beider Backen 16, 17 mit dem jeweiligen Ritzel 51, 52 in Eingriff stehen. Die Länge l der Zahnreihenabschnitte 20 liegt dabei typischerweise im Bereich von dem 1,2 bis 1,5 fachen des Abstands a der Drehachsen 24 der beiden Ritzel 51, 52.

In der in der Figur 7 gezeigten einen äußeren Hubendlage ist die Anordnung derart, dass jeweils nur ein Ritzel 51, 52 mit jeweils nur einer der Zahnreihenabschnitte 20 zusammenwirkt. Ferner ist die Anordnung derart, dass die Ritzel 51, 52 jeweils nur dem den letzten, innen liegenden Zähnen der Zahnreihenabschnitte 20 im Eingriff sind. In der nicht gezeigten anderen Hubendlage befindet sich das jeweils andere Ritzel 50, 51 mit dem jeweils anderen Zahnreihenabschnitt 20 in Wirkverbindung.

Wie aus Figur 1 deutlich wird, sind die Führungsabschnitte 14 als Führungsleisten mit an zwei einander abgewandten Seitenwandungen vorgesehenen Führungsflächen 54 ausgebildet. Die Seitenwandungen mit den Führungsflächen 54 sind im dargestellten Ausführungsbeispiel senkrecht zur Ebene E verlaufend angeordnet. Hierdurch wird eine stehende Führung realisiert, wodurch in radialer Richtung Bauraum eingespart werden kann. Allerdings kann auch vorgesehen sein, dass die Seitenwandungen mit den Führungsflächen 54 parallel zur Ebene E verlaufend angeordnet sind, wodurch eine liegende Führung realisiert wird, die in axialer Richtung vergleichsweise schlank baut.

Die Greifvorrichtungen 10 und 50 weisen den Vorteil auf, dass sie im Vergleich zu bekannten Greifvorrichtungen einen deutlich größeren Backenhub aufweisen, wobei beim Verfahren der Backen 16, 17 aus der Mittellage, bzw. inneren Hublage in die jeweilige äußere Hubendlage die Zahnreihenabschnitte 20 jeweils mit einer unterschiedlichen Anzahl von Ritzeln zusammenwirken. Benachbarte Ritzel 21, 22, 23 bzw. 51, 52 übergeben folglich den jeweiligen Zahnreihenabschnitt 20 weiter zum nächsten Ritzel, bis die äußere Hubendlage erreicht ist. In der jeweiligen äußeren Hubendlage wirkt jeweils nur ein Ritzel 21, 23 bzw. 51, 52 mit nur einem Zahnreihenabschnitt 20 zusammen.

## Patentansprüche

1. Spann- oder Greifvorrichtung (10, 50), mit einem Grundkörper (12), mit am Grundkörper (12) vorgesehenen, Führungsabschnitten (14), mit entlang den Führungsabschnitten (14) in Verfahrrichtung (19) bewegbaren Backen (16, 17), die zwischen einer inneren Hublage und einer äußeren Hubendlage verfahrbar sind, wobei die Backen (16, 17) jeweils einen Zahnreihenabschnitt (20) mit jeweils einer sich in Verfahrrichtung (19) erstreckenden Länge l aufweisen, und wobei mehrere Ritzel (21, 22, 23; 51, 52), deren Drehachsen (24) in einer parallel zu den jeweiligen Zahnreihenabschnitten (20) liegenden Ebene (E) liegen, vorgesehen sind, wobei die Ritzel (21, 22, 23; 51, 52) zum Antreiben der Backen (16, 17) mit dem jeweiligen Zahnreihenabschnitt (20) zusammenwirken, und wobei die Drehachsen der Ritzel (21, 22, 23; 51, 52) einen Abstand a zueinander aufweisen, wobei in einer der inneren Hublagen wenigstens zwei Ritzel (21, 22, 23, 51, 52) mit einem Zahnreihenabschnitt (20) zusammenwirken, **dadurch gekennzeichnet, dass** die Längen s der Führungsabschnitte (14), die Längen l der Zahnreihenabschnitte (20) und der Abstand a der benachbarten Ritzel (21, 22, 23; 51, 52) so gewählt sind, dass in der äußeren Hubendlage ein Ritzel (21 bzw. 23; 51 bzw. 52) mit nur einem Zahnreihenabschnitt (20) und ein anderes Ritzel (22 bzw. 21; 52 bzw. 51) mit nur dem anderen Zahnreihenabschnitt (20) zusammenwirkt

2. Spann- oder Greifvorrichtung (10, 50) nach Anspruch 1, **dadurch gekennzeichnet, dass** die Länge l der Zahnreihenabschnitte (20) im Bereich des 1,0 bis 2,0 fachen des Abstands a der Drehachsen (24) benachbarter Ritzeln (31, 33, 33; 51, 52), und vorzugsweise im Bereich des 1,1 bis 1,5 fachen des Abstands a der Drehachsen (24) der benachbarten Ritzeln (31, 33, 33; 51, 52) liegen.

3. Spann- oder Greifvorrichtung (10, 50) nach Anspruch 1 oder 2, **dadurch gekennzeichnet, dass** die Länge s der Führungsabschnitte (14) im Bereich des 2 bis 6 fachen, und vorzugsweise im Bereich des 3 bis 4 fachen, der Länge l der Zahnreihenabschnitte (20) liegen.

4. Spann- oder Greifvorrichtung (10, 50) nach Anspruch 1, 2 oder 3, **dadurch gekennzeichnet, dass** drei Ritzel (21, 22, 23) vorgesehen sind, wobei die Zahnreihenabschnitte (20) in der inneren Hublage mit nur dem mittleren Ritzel (22) zusammen wirken.

5. Spann- oder Greifvorrichtung (10, 50) nach einem der vorhergehenden Ansprüche, **dadurch gekennzeichnet, dass** jedes Ritzel (21, 22, 23; 51, 52) an einer Welle (31, 33, 33) vorgesehen ist und dass jede Welle (31, 33, 33) ein das zugehörige Ritzel (21, 22, 23; 51, 52) in radialer Richtung überragendes Zahnrad (38) aufweist.

6. Spann- oder Greifvorrichtung (10, 50) nach einem der vorhergehenden Ansprüche **dadurch gekennzeichnet, dass** zwei benachbarte Zahnräder (38) über ein Koppelrad (40) miteinander bewegungsgekoppelt sind.

7. Spann- oder Greifvorrichtung (10, 50) nach Anspruch 6, **dadurch gekennzeichnet, dass** eine Antriebswelle (42) mit einem Antriebsritzel (44) vorgesehen ist, welches mit einem Zahnrad (38) oder einem Koppelrad (40) zum Antrieb der Wellen (31, 32, 33) zusammen wirkt.

8. Spann- oder Greifvorrichtung (10, 50) nach einem der vorhergehenden Ansprüche, **dadurch gekennzeichnet, dass** die Führungsabschnitte (14) als Führungsleisten mit an zwei einander abgewandten Seitenwandungen vorgesehenen Führungsflächen ausgebildet sind, wobei die Seitenwandungen mit den Führungsflächen parallel zu einer von den Drehachsen (24) der Ritzel (31, 33, 33; 51, 52) aufgespannten Ebene (E) verlaufend angeordnet sind.

9. Spann- oder Greifvorrichtung (10, 50) nach einem der Ansprüche 1 bis 8, **dadurch gekennzeichnet, dass** die Führungsabschnitte (14) als Führungsleisten mit an zwei einander abgewandten Seitenwandungen vorgesehenen Führungsflächen ausgebildet sind, wobei die Seitenwandungen mit den Führungsflächen senkrecht zu einer von den Drehachsen (24) der Ritzel (31, 33, 33; 51, 52) aufgespannten Ebene (E) verlaufend angeordnet sind.

## Claims

1. Clamping or gripping device (10, 50), comprising a main body (12), guide portions (14) provided on the main body (12), jaws (16, 17) which are movable along the guide portions (14) in the travel direction (19) and which can be moved between an inner stroke position and an outer stroke end position, the jaws (16, 17) each having a tooth row portion (20) with a length 1 which extends in the travel direction (19) in each case, and a plurality of pinions (21, 22, 23; 51, 52) being provided, the axes of rotation (24) of which pinions lie in a plane (E) which lies in parallel with the respective tooth row portions (20), the pinions (21, 22, 23; 51, 52) interacting with the relevant tooth row portion (20) in order to drive the jaws (16, 17), and the axes of rotation of the pinions (21, 22, 23; 51, 52) having a distance a from one another, at least two pinions (21, 22, 23, 51, 52) interacting with a tooth row portion (20) in one of the inner stroke positions, **characterized in that** the lengths s of the guide portions (14), the lengths 1 of the tooth row portions (20) and the distance a of the adjacent pinions (21, 22, 23; 51, 52) are selected such that in the outer stroke end position a pinion (21 or 23; 51 or 52) interacts with only one tooth row portion (20) and another pinion (22 or 21; 52 or 51) interacts with only the other tooth row portion (20).

2. Clamping or gripping device (10, 50) according to claim 1, **characterized in that** the length 1 of the tooth row portions (20) are in the range of 1.0 to 2.0 times the distance a of the axes of rotation (24) of adjacent pinions (31, 33, 33; 51, 52), and preferably in the range of 1.1 to 1.5 times the distance a of the axes of rotation (24) of the adjacent pinions (31, 33, 33; 51, 52) .

3. Clamping or gripping device (10, 50) according to claim 1 or claim 2, **characterized in that** the length s of the guide portions (14) are in the range of 2 to 6 times, and preferably in the range of 3 to 4 times, the length 1 of the tooth row portions (20).

4. Clamping or gripping device (10, 50) according to claim 1, claim 2 or claim 3, **characterized in that** three pinions (21, 22, 23) are provided, the tooth row portions (20) interacting with only the middle pinion (22) in the inner stroke position.

5. Clamping or gripping device (10, 50) according to any of the preceding claims, **characterized in that** each pinion (21, 22, 23; 51, 52) is provided on a shaft (31, 33, 33), and that each shaft (31, 33, 33) has a gear (38) which projects beyond the associated pinion (21, 22, 23; 51, 52) in the radial direction.

6. Clamping or gripping device (10, 50) according to any of the preceding claims, **characterized in that** two adjacent gears (38) are coupled in motion to one another via a coupling gear (40).

7. Clamping or gripping device (10, 50) according to claim 6, **characterized in that** a drive shaft (42) having a drive pinion (44) is provided, which drive pinion interacts with a gear (38) or a coupling gear (40) for driving the shafts (31, 32, 33).

8. Clamping or gripping device (10, 50) according to any of the preceding claims, **characterized in that** the guide portions (14) are designed as guide strips with guide surfaces provided on two side walls facing away from one another, the side walls having the guide surfaces being arranged so as to extend in parallel with a plane (E) spanned by the axes of rotation (24) of the pinions (31, 33, 33; 51, 52).

9. Clamping or gripping device (10, 50) according to any of claims 1 to 8, **characterized in that** the guide portions (14) are designed as guide strips with guide surfaces provided on two side walls facing away from one another, the side walls having the guide surfaces being arranged so as to extend perpendicular to a plane (E) spanned by the axes of rotation (24) of the pinions (31, 33, 33; 51, 52).

## Revendications

1. Dispositif de serrage ou de préhension (10, 50), avec un corps de base (12), avec des parties de guidage (14) prévues sur le corps de base (12), avec des mâchoires (16, 17) mobiles le long des parties de guidage (14) dans la direction de déplacement (19), qui sont déplaçables entre une position de course intérieure et une position de fin de course extérieure, dans lequel les mâchoires (16, 17) présentent respectivement une partie de rangées de dents (20) avec respectivement une longueur l s'étendant dans la direction de déplacement (19), et dans lequel plusieurs pignons (21, 22, 23; 51, 52), dont les axes de rotation (24) se situent dans un plan (E) situé parallèlement aux parties de rangées de dents (20) respectives, sont prévus, dans lequel les pignons (21, 22, 23; 51, 52) pour l'entraînement des mâchoires (16, 17) coopèrent avec la partie de rangées de dents (20) respective, et dans lequel les axes de rotation des pignons (21, 22, 23, 51, 52) présentent un écart a les uns par rapport aux autres, dans lequel dans une des positions de course intérieures au moins deux pignons (21, 22, 23; 51, 52) coopèrent avec une partie de rangées de dents (20), **caractérisé en ce que** les longueurs s des parties de guidage (14), les longueurs l des parties de rangées de dents (20) et l'écart a entre les pignons (21, 22, 23; 51, 52) voisins sont choisis de sorte que dans la position de fin de course extérieure un pignon (21 ou 23; 51 ou 52) ne coopère qu'avec une partie de rangées de dents (20) et un autre pignon (22 ou 21; 52 ou 51) ne coopère qu'avec l'autre partie de rangées de dents (20).

2. Dispositif de serrage ou de préhension (10, 50) selon la revendication 1, **caractérisé en ce que** la longueur l des parties de rangées de dents (20) se situe dans la plage de 1,0 à 2,0 fois l'écart a entre les axes de rotation (24) de pignons (31, 33, 33; 51, 52) voisins, et de préférence dans la plage de 1,1 à 1,5 fois l'écart a entre les axes de rotation (24) des pignons (31, 33, 33; 51, 52) voisins.

3. Dispositif de serrage ou de préhension (10, 50) selon la revendication 1 ou 2, **caractérisé en ce que** la longueur s des parties de guidage (14) se situe dans la plage de 2 à 6 fois, et de préférence dans la plage de 3 à 4 fois la longueur l des parties de rangées de dents (20).

4. Dispositif de serrage ou de préhension (10, 50) selon la revendication 1, 2 ou 3, **caractérisé en ce que** trois pignons (21, 22, 23) sont prévus, dans lequel les parties de rangées de dents (20) ne coopèrent dans la position de course intérieure qu'avec le pignon central (22) .

5. Dispositif de serrage ou de préhension (10, 50) selon l'une quelconque des revendications précédentes, **caractérisé en ce que** chaque pignon (21, 22, 23; 51, 52) est prévu sur un arbre (31, 33, 33) et que chaque arbre (31, 33, 33) présente une roue dentée (38) faisant saillie du pignon (21, 22, 23; 51, 52) associé dans la direction radiale.

6. Dispositif de serrage ou de préhension (10, 50) selon l'une quelconque des revendications précédentes, **caractérisé en ce que** deux roues dentées (38) voisines sont accouplées en mouvement l'une à l'autre par l'intermédiaire d'une roue d'accouplement (40).

7. Dispositif de serrage ou de préhension (10, 50) selon la revendication 6, **caractérisé en ce qu'**un arbre d'entraînement (42) est pourvu d'un pignon d'entraînement (44), lequel coopère avec une roue dentée (38) ou une roue d'accouplement (40) pour l'entraînement des roues (31, 32, 33).

8. Dispositif de serrage ou de préhension (10, 50) selon l'une quelconque des revendications précédentes, **caractérisé en ce que** les parties de guidage (14) sont réalisées sous la forme de barres de guidage avec des surfaces de guidage prévues sur deux parois latérales opposées l'une à l'autre, dans lequel les parois latérales avec les surfaces de guidage sont disposées de manière à s'étendre parallèlement à un plan (E) tendu par les axes de rotation (24) des pignons (31, 33, 33; 51, 52).

9. Dispositif de serrage ou de préhension (10, 50) selon l'une quelconque des revendications 1 à 8, **caractérisé en ce que** les parties de guidage (14) sont réalisées sous la forme de barres de guidage avec des surfaces de guidage prévues sur deux parois latérales opposées l'une à l'autre, dans lequel les parois latérales avec les surfaces de guidage sont disposées de manière à s'étendre perpendiculairement à un plan (E) tendu par les axes de rotation (24) des pignons (31, 33, 33; 51, 52) .
